# EUROPÄISCHE PATENTSCHRIFT

(11) **EP 1 039 177 B1**
(45) Veröffentlichungstag und Bekanntmachung des Hinweises auf die Patenterteilung: **08.10.2003**
(21) Anmeldenummer: 00103413.1
(22) Anmeldetag: 24.02.2000
(51) Int. Cl.: F16H 55/06, F16H 55/18

(54) **Antirasselzahnscheibe, insbesondere für ein Kraftfahrzeuggetriebe, und Verfahren zur Herstellung einer Antirasselzahnscheibe**
Anti-rattle gear wheel, especially for a vehicle transmission, and manufacturing process for said anti-rattle gear wheel
Roue dentée de type anti-cliquetis, en particulier pour boîte de vitesses de véhicules, et procédé pour la fabrication d'une telle roue dentée

(30) Priorität: 25.03.1999 DE 19913563
(43) Veröffentlichungstag der Anmeldung: 27.09.2000
(73) Patentinhaber: Volkswagen Aktiengesellschaft, 38436 Wolfsburg (DE)
(72) Erfinder: Lemke, Klaus-Jürgen, Dipl.-Ing., 38527 Meine (DE); Jurisch, Frank, Dr., 44892 Bochum (DE)

(56) Entgegenhaltungen:
- DE-A- 19 616 503
- GB-A- 2 057 625
- US-A- 4 635 501

## Beschreibung

Die Erfindung betrifft eine Antirasselzahnscheibe, die insbesondere für ein Kraftfahrzeuggetriebe vorgesehen ist, mit einem Außendurchmesser, der dem eines zugeordneten Zahnrades entspricht, und mit einer von dem Zahnrad abweichenden Zahnanzahl, wobei die Antirasselzahnscheibe einen hartmagnetischen Werkstoff aufweist.

Insbesondere in solchen Kraftfahrzeuggetrieben, die als synchronisierte Stufenwechselgetriebe ausgebildet sind, kann es aufgrund von Anregungen durch einen als Verbrennungskraftmaschine ausgebildeten Antriebsmotor zu einem sogenannten Rasseln kommen. Ausgehend von Drehschwingungen von Festrädern des jeweiligen Kraftfahrzeuggetriebes handelt es sich dabei um eine Überbrückung des Zahnflankenspieles zwischen den miteinander in Eingriff befindlichen Zähnen von Los- und Festrädern der momentan nicht geschalteten Gangzahnradpaare. Ein solches Rasseln wird vom Fahrer als komfortmindernd empfunden und kann unter Umständen die Lebensdauer des Kraftfahrzeuggetriebes beeinträchtigen. Durch eine zunehmende Verbrauchsoptimierung der Verbrennungskraftmaschinen neigen diese zu einem härteren Laufverhalten, so daß sich größere Ungleichförmigkeiten ergeben, die von der Kurbelwelle über die Kupplung auf das Kraftfahrzeuggetriebe übertragen werden. Das Problem des Rasselns gewinnt damit zunehmend an Bedeutung.

Zur Unterdrückung des Rasselns sind unterschiedliche Lösungsvorschläge bekannt geworden. In der DE 43 12 316 A1 wird beispielsweise eine Reibvorrichtung vorgeschlagen, bei der in einem Losrad ein Federelemente aufweisendes Ringelement mit Reibkörpern angeordnet ist. Durch die Reibvorrichtung sind Relativbewegungen zwischen einer Welle und dem Losrad bei niedrigerer Drehzahl des Losrades unterdrückbar. Bei höherer Drehzahl des Losrades ist der Reibschluß entgegen der Wirkung der Federelemente durch Fliehkraftwirkung aufhebbar. Die Reibvorrichtung ist relativ kompliziert, was Aufbau und Montage angeht, sie erfordert einen gewissen Raum, der in Kraftfahrzeuggetrieben grundsätzlich knapp bemessen ist, und sie funktioniert nur bei niedrigeren Drehzahlen.

Eine andere Möglichkeit zur Vermeidung des Rasseins ist ein Zweimassenschwungrad, bei dem die Kurbelwelle der Verbrennungskraftmaschine mit einer ersten Drehmasse sowie eine Getriebewelle mit einer zweiten Drehmasse verbunden ist. Ein zwischen den beiden Drehmassen angeordnetes Lager erlaubt eine Verdrehung der Drehmassen gegeneinander. Zur Übertragung eines Drehmomentes von der Kurbelwelle zur Getriebewelle und zur Entkopplung der Drehschwingungen der Verbrennungskraftmaschine in Richtung Kraftfahrzeuggetriebe stehen die beiden Drehmassen über Feder- und / oder Dämpfungselemente oder in anderer Weise miteinander in Verbindung. In der DE 196 53 865 A1 wird beispielsweise ein Zweimassenschwungrad zur Anordnung zwischen einer Verbrennungskraftmaschine und einem Kraftfahrzeuggetriebe vorgestellt, bei dem die Drehmassen jeweils über Magnetkräfte erzeugende Mittel verfügen, wobei diese derart ausgebildet und angeordnet sind, daß Drehmassensegmente von der einen und der anderen Drehmasse mit gleicher magnetischer Polarität einander gegenüberstehen. In diesem Fall wird die Übertragung des Drehmomentes von der Kurbelwelle zur Getriebewelle und die Entkopplung der Drehschwingungen der Verbrennungskraftmaschine in Richtung Kraftfahrzeuggetriebe durch Magnetkräfte bewerkstelligt. Diese Lösung hat den Vorteil, drehzahlunabhängig zu funktionieren. Jedoch ist der Aufwand, insbesondere im Hinblick auf Gewicht und Fertigungskosten, beträchtlich.

Aus der gattungsbildenden DE 196 16 503 A1 ist ein Getriebezahnrad mit einer magnetischen Antirasselzahnscheibe bekannt, mit der Rassel- und Klappergeräusche beim Zahneingriff in ein weiteres Zahnrad mit relativ geringem Aufwand vermieden werden können. Die Antirasselzahnscheibe, deren Durchmesser dem des Getriebezahnrades entspricht und deren Zahnanzahl von derjenigen des Getriebezahnrades abweicht, ist an einer Stirnseite des Getriebezahnrades magnetisch fixiert und gegenüber dem Getriebezahnrad verdrehbar angeordnet. Die das Rasseln vermeidende Wirkung wird durch eine Verspannung des Zahnrades zwischen dem Getriebezahnrad und der Zahnscheibe erzielt. Aufgrund der unterschiedlichen Zahnanzahl dreht sich die Zahnscheibe zwangsläufig mit einer anderen Drehzahl als das Getriebezahnrad. Dadurch liegen die in Eingriff befindlichen Zähne des Getriebezahnrades und der Zahnscheibe jeweils an gegenüberliegenden Zahnflanken des Zahnrades an. Aufgrund eines durch die magnetische Zahnscheibe erzeugten Magnetfeldes und der unterschiedlichen Drehzahlen wirkt zwischen der Zahnscheibe und dem Getriebezahnrad ein Reibmoment, mit dem letztlich das Zahnrad an einer Überbrückung des Zahnflankenspiels gehindert und damit das Rasseln unterbunden wird. Die Zahnscheibe besteht entweder aus einem mit einem magnetischen Material versehenen Kunststoff oder aus einem nichtmagnetischen Werkstoff, wobei dann Segmente aus einem magnetischen Werkstoff vorgesehen sind. Im ersten Fall ist die Erzeugung eines hinreichend starken Magnetfeldes schwierig, im zweiten Fall sind die Fertigungskosten hoch und es können sich Festigkeitsprobleme ergeben.

Der vorliegenden Erfindung liegt daher das Problem zugrunde, die gattungsbildende Antirasselzahnscheibe bei sicherer magnetischer Funktion derart weiterzubilden, daß eine preisgünstige Großserienproduktion möglich ist. Weiterhin soll ein Verfahren zur Herstellung der Antirasselzahnscheibe aufgezeigt werden.

Das Problem wird durch die Merkmale des Anspruches 1 gelöst. Vorteilhafte Ausgestaltungen ergeben sich aus den Unteransprüchen 2 bis 7.

In den Ansprüchen 8 bis 10 wird ein Verfahren zur Herstellung einer derartigen Antirasselzahnscheibe aufgezeigt und weitergebildet.

Eine Antirasselzahnscheibe, die insbesondere für ein Kraftfahrzeuggetriebe vorgesehen ist, wird an einer Stimseite eines einem Zahnradpaar des Kraftfahrzeuggetriebes zugeordneten Zahnrades angeordnet. Die Antirasselzahnscheibe verfügt über einen Außendurchmesser, der dem des zugeordneten Zahnrades entspricht, und über eine von dem Zahnrad abweichende Zahnanzahl. Ist das zugeordnete Zahnrad das antreibende, so weist die Zahnscheibe weniger Zähne, bevorzugt einen Zahn weniger, als das Zahnrad auf. In dem Fall, daß das zugeordnete Zahnrad das angetriebene ist, weist die Zahnscheibe mehr Zähne, bevorzugt einen Zahn mehr, auf. Durch die unterschiedliche Anzahl der Zähne ergibt sich zwangsläufig ein Drehzahlunterschied und somit eine Relativdrehung zwischen der Antirasselzahnscheibe und dem zugeordneten Zahnrad. Die Antirasselzahnscheibe ist mit einem hartmagnetischen, d.h. dauermagnetischen Werkstoff versehen. Durch ein derart erzeugtes Magnetfeld wird eine kraftschlüssige Verbindung mit dem zugeordneten Zahnrad hergestellt, die sich im wesentlichen in einer axialen Anpreßkraft äußert. Somit ist die Übertragung eines Schleppmomentes zwischen der Antirasselzahnscheibe und dem Zahnrad zur Unterdrückung des Rasselns möglich. Das Schleppmoment ergibt sich aus der Relativdrehung und dem wirksamen Magnetfeld und wird im wesentlichen durch Reibung übertragen. Der hartmagnetische Werkstoff ist ringförmig angeordnet, was für die Erzeugung eines starken Magnetfeldes vorteilhaft ist. Dem hartmagnetischen Werkstoff ist ein ein weichmagnetisches Material aufweisendes Behälterbauteil zugeordnet, in dem der hartmagnetische Werkstoff angeordnet ist. Das Behälterbauteil hat die Funktion, das Magnetfeld auszurichten und zu verstärken. Das Behälterbauteil ist auch in einem Kernmaterial der Antirasselzahnscheibe eingebettet, d.h. es ist form- und kraftschlüssig mit der Antirasselzahnscheibe verbunden und kann auch tragende Funktion haben. Somit ist ebenfalls eine gute Verbindung zwischen dem hartmagnetischen Werkstoff und der Antirasselzahnscheibe gegeben. Der hartmagnetische Werkstoff kann in weitgehend reiner Form, z.B. als Sinterwerkstoff, oder eingebunden in ein Matrixmaterial in das Behälterbauteil eingebracht und mit diesem verbunden sein. Es ist jedoch auch eine Befestigung des hartmagnetischen Materials in Form von vorher gepreßten Ringmagneten oder von Ringsegmenten in dem Behälterbauteil möglich. Entscheidend für ein starkes Magnetfeld ist eine geschlossene ringförmige Anordnung des hartmagnetischen Materials. Da die Antirasselzahnscheibe magnetisch an dem zugeordneten Zahnrad gehalten wird, kann auf mechanische Sicherungs- oder Anpreßmittel verzichtet werden.

Durch die beschriebene Ausbildung der Antirasselzahnscheibe ist eine funktionstüchtige und preiswerte Lösung gefunden, so daß das der Erfindung zugrundeliegende Problem gelöst ist.

Im folgenden werden bevorzugte Weiterbildungen der erfindungsgemäßen Antirasselzahnscheibe erläutert.

Das Behälterbauteil kann als U-förmiger Ring ausgebildet sein, so daß der hartmagnetische Werkstoff sowohl in Pulverform als auch in flüssiger Form eingebracht werden kann. Der flüssige Zustand schließt in diesem Fall eine Dispersion eines pulverförmigen magnetischen Werkstoffes in einem flüssigen aushärtbaren Matrixwerkstoff ein. Eine offene Seite des Ringes kann bevorzugt an einer Zahnradstirnseite, d.h. an der dem zugeordneten Zahnrad zugewandten Stirnseite, angeordnet sein. Durch den U-förmigen Querschnitt mit einer Innenund einer Außenflanke und durch die Anordnung des Behälterbauteiles wird eine optimale Ausrichtung des wirksamen Magnetfeldes und dessen Verstärkung erreicht. Einer der bei Magneten üblichen zwei Pole wird in diesem Fall von dem hartmagnetischen Material selbst gebildet und befindet sich im Querschnitt betrachtet in der Mitte zwischen den Flanken des Behälterbauteiles. Der andere Pol ist auf die Innen- und die Außenflanke des Behälterbauteiles aufgeteilt. Durch einen mit dieser Anordnung erreichbaren geringstmöglichen Abstand zwischen der Antirasselzahnscheibe und dem Zahnrad wird das Magnetfeld bestmöglich zur Erzeugung der axialen Anpreßkraft genutzt. Wesentliche Komponenten der magnetisch erzeugten Anpreßkraft liegen dabei an den beiden Flanken des Behälterbauteiles. Im übrigen ist das Magnetfeld in einem Außenraum, d.h. außerhalb seines unmittelbaren Wirkungsbereiches, relativ schwach ausgebildet, so daß eine magnetische Anziehung und Ablagerungen von metallischem Abrieb vermieden werden.

Das Behälterbauteil kann Haltenasen aufweisen, die am inneren und / oder am äußeren Umfang des Behälterbauteiles angeordnet sein können. Durch derartige Haltenasen ist eine sichere Verbindung des Behälterbauteiles und dem in diesem angeordneten hartmagnetischen Material mit der Antirasselzahnscheibe, die bevorzugt aus einem gießoder spritzbaren Material bestehen kann, gegeben.

Als Ausgangsmaterial des Behälterbauteiles kann ein Metallblech vorgesehen sein, wobei das Behälterbauteil dann bevorzugt als Press- und / oder Stanzbauteil ausgebildet sein kann. Ein Metallblech ist im allgemeinen weichmagnetisch, d.h. magnetisierbar, und verstärkt somit das durch den hartmagnetischen Werkstoff erzeugte Magnetfeld. Im übrigen ist das Behälterbauteil ,z.B. mit dem U-förmigen Querschnitt und den Haltenasen, durch Stanzen, Tiefziehen, Prägen und Biegen preiswert herstellbar.

Der hartmagnetische Werkstoff kann weitgehend homogen in einem Kunststoffmaterial eingebunden sein,. wodurch eine gleichmäßige Ausbildung des Magnetfeldes erreichbar ist.

Als Material der Antirasselzahnscheibe kann im wesentlichen ein spritzbarer Kunststoff vorgesehen sein, mit dem das Behälterbauteil umspritzt sein kann. Als ein solcher Kunststoff kommt z.B. spritzbarer Faserverbundwerkstoff in Frage, der sehr stabil und fest ist. Durch das Umspritzen wird eine feste Verbindung zwischen dem Behälterbauteil und der eigentlichen Antirasselzahnscheibe hergestellt. Ansonsten eventuell erforderliche Fräs- und /oder Klebevorgänge entfallen.

Das Behälterbauteil kann an der Zahnradstimseite, d.h. der dem Zahnrad zugewandten Stirnseite, der Antirasselzahnscheibe von einer Umspritzung mit dem Kunststoff ausgespart sein. Hierdurch wird aufgrund einer Minimierung des Abstandes zwischen der Antirasselzahnscheibe und dem zugeordneten Zahnrad und einer Vermeidung von nichtmagnetischem Zwischenmaterial eine größtmögliche Wirkung des Magnetfeldes erreicht.

Bei dem Verfahren zur Herstellung einer Antirasselzahnscheibe wird ein hartmagnetischer Werkstoff in ein ringförmig ausgebildetes, ein weichmagnetisches Material und einen U-förmigen Querschnitt aufweisendes Behälterbauteil eingebracht und das Behälterbauteil in einer der Antirasselzahnscheibe entsprechenden Form mit Kunststoff umspritzt. Ein solches Verfahren eignet sich für eine Großserienherstellung und ist besonders preiswert.

Dabei kann der hartmagnetische Werkstoff weitgehend homogen in einem Kunststoffmaterial eingebunden werden. Der hartmagnetische Werkstoff kann dazu beispielsweise in Pulverform mit dem Kunststoffmaterial, dessen Aushärtung zu einem späteren Zeitpunkt erfolgen kann, vermischt und in das Behälterbauteil eingefüllt werden. Auf diese Art und Weise wird ein bei Verwendung von reinem Magnetpulver erforderlicher aufwendiger und teurer Sintervorgang vermieden.

Der hartmagnetische Werkstoff kann in einem Magnetfeld aufmagnetisiert werden. Das Aufmagnetisieren erfolgt zweckmäßigerweise nach der Herstellung der kompletten Antirasselzahnscheibe und unmittelbar vor dem Einbau in das zugeordnete Kraftfahrzeuggetriebe oder vor der Montage einer entsprechenden Baugruppe desselben.

Die Erfindung wird nun anhand eines Ausführungsbeispieles weiter beschrieben.

Es zeigen
- Figur 1: eine Antirasselzahnscheibe in einer Seitenansicht und
- Figur 2: die Antirasselzahnscheibe in einem Querschnitt.

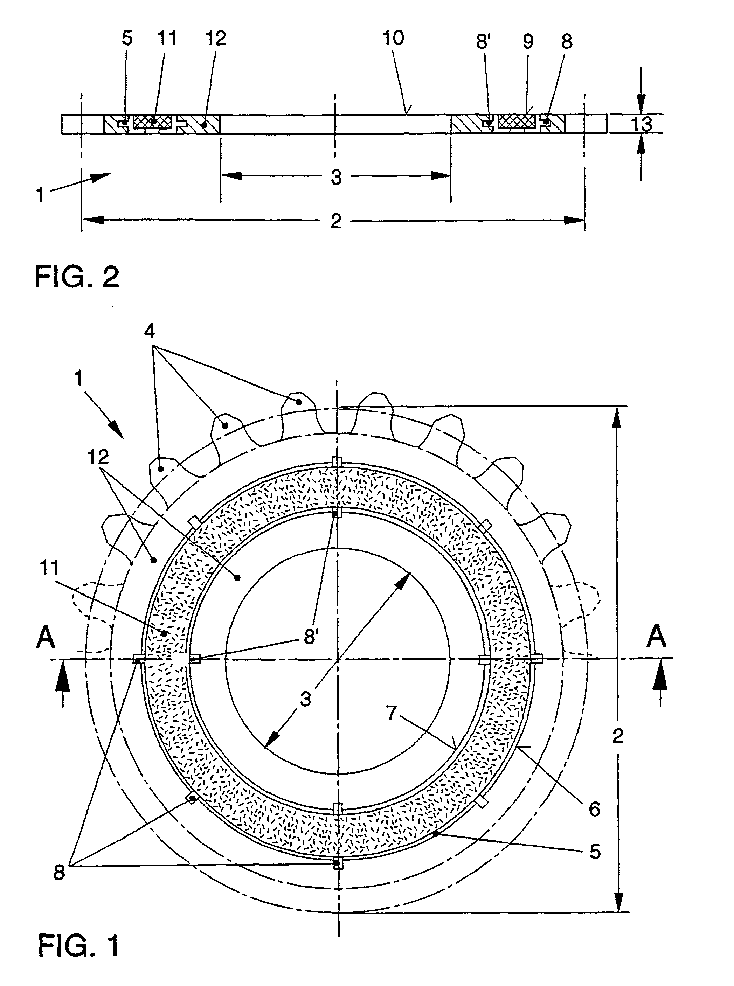

In Figur 1 ist eine Antirasselzahnscheibe 1 dargestellt, die einen Außendurchmesser 2 aufweist, der demjenigen eines zugeordneten, hier nicht abgebildeten Zahnrades entspricht. Ein Innendurchmesser 3 der Antirasselzahnscheibe 1 ist derart ausgelegt, daß die Antirasselzahnscheibe 1 auf einem Bund des zugeordneten Zahnrades oder auf einer Welle drehbar gelagert werden kann. Die Antirasselzahnscheibe 1 weist eine Zahnanzahl 4 auf, die von derjenigen des zugeordneten Zahnrades abweicht. In die Antirasselzahnscheibe 1 ist ein Behälterbauteil 5 eingebettet, das ringförmig ausgebildet ist und das sowohl an seinem äußeren Umfang 6 als auch an seinem inneren Umfang 7 Haltenasen 8, 8' aufweist. Das Behälterbauteil 5 ist im Querschnitt U-förmig ausgebildet, wobei eine offene Seite 9 (siehe Figur 2) an einer dem zugeordneten Zahnrad zugewandten Zahnradstirnseite 10 angeordnet ist. In dem Behälterbauteil 5, für das ein weichmagnetisches Material vorgesehen ist, ist ein hartmagnetischer Werkstoff 11 angeordnet, der hier in einem Kunststoff eingebunden und mit dem Behälterbauteil 5 fest verbunden ist. Alternativ dazu kann der hartmagnetische Werkstoff 11 auch in reiner Form Verwendung finden. Das Behälterbauteil 5 ist von einem Kemmaterial 12 der Antirasselzahnscheibe 1 umgeben, für das ein spritzbarer Faserverbundwerkstoff vorgesehen ist. Die ringförmige Anordnung des hartmagnetischen Werkstoffes 11 sorgt in Verbindung mit dem weichmagnetischen Material und der U-förmigen Ausbildung des Behälterbauteiles 5 für die Ausbildung eines starken Magnetfeldes, mit dem die Antirasselzahnscheibe 1 an dem zugeordneten Zahnrad gehalten und die Übertragung eines Drehmomentes zwischen beiden Bauteilen ermöglicht wird.

Die Figur 2 zeigt einen Querschnitt A - A gemäß Figur 1. Es ist erkennbar, daß die Antirasselzahnscheibe 1 eine im Verhältnis zu ihrem Außendurchmesser 2 geringe Dicke 13 aufweist, die im wesentlichen der des U-förmigen Behälterbauteiles 5 entspricht. Bei dem Behälterbauteil 5 handelt es sich um ein preiswert herstellbares Blechpress- und -stanzbauteil, welches beispielsweise in einem Spritzgußverfahren in das Kernmaterial 12 der Antirasselzahnscheibe 1 eingebettet werden kann. Dabei dienen die am äußeren und inneren Umfang 6, 7 vorhandenen Haltenasen 8, 8' einer festen formschlüssigen Verbindung des Behälterbauteiles 5 mit der Antirasselzahnscheibe 1.

Die Wirkung der Antirasselscheibe 1 beruht darauf, daß sich zwischen der Antirasselzahnscheibe 1 und dem zugeordneten Zahnrad bei einem gemeinsamen Eingriff mit einem Gegenzahnrad aufgrund der unterschiedlichen Zahnanzahl 4 ein Drehzahlunterschied ergibt. In Verbindung mit dem die Antirasselzahnscheibe 1 an dem zugeordneten Zahnrad haltenden Magnetfeld bewirkt der Drehzahlunterschied ein Schleppmoment, das an dem Gegenzahnrad dazu führt, daß die Zähne des Zahnrades und der Antirasselzahnscheibe jeweils an gegenüberliegenden Zahnflanken des Gegenzahnrades anliegen, so daß eine das Rasseln verursachende Überbrückung des Zahnflankenspiels zwischen dem Zahnrad und dem Gegenzahnrad vermieden wird. Handelt es sich bei dem der Antirasselzahnscheibe 1 zugeordneten Zahnrad um ein Festrad, so weist die Antirasselzahnscheibe 1 weniger Zähne als das Zahnrad auf, bevorzugt einen Zahn weniger. Die Antirasselzahnscheibe 1 bewegt sich dann pro Umdrehung des zugeordneten Zahnrades um die fehlenden Zähne bzw. den fehlenden Zahn gegenüber dem Zahnrad weiter, d.h. die Antirasselzahnscheibe 1 dreht sich schneller als das zugeordnete Zahnrad. Das Gegenzahnrad treibt dann die Antirasselzahnscheibe 1 gegen die Wirkung des Schleppmomentes an, während es selbst von dem Zahnrad angetrieben wird. Ist das zugeordnete Zahnrad ein Losrad, so weist die Antirasselzahnscheibe 1 mehr Zähne auf als das Zahnrad, bevorzugt einen Zahn mehr, d.h. die Antirasselzahnscheibe 1 dreht sich langsamer als das zugeordnete Zahnrad. Das Zahnrad wird in diesem Fall von dem Gegenzahnrad angetrieben, während die Antirasselzahnschiebe 1 von dem Gegenzahnrad gebremst wird, was sich über die Wirkung des Schleppmomentes auch auf das Zahnrad auswirkt. In beiden Fällen wird die Überbrückung des Zahnflankenspiels zwischen dem Zahnrad und dem Gegenzahnrad und damit das Rasseln vermieden.

### BEZUGSZEICHENLISTE

- 1: Antirasselzahnscheibe
- 2: Außendurchmesser
- 3: Innendurchmesser
- 4: Zahnanzahl
- 5: Behälterbauteil
- 6: äußerer Umfang
- 7: innerer Umfang
- 8: Haltenase (außen)
- 8': Haltenase (innen)
- 9: offene Seite
- 10: Zahnradstimseite
- 11: hartmagnetischer Werkstoff
- 12: Kernmaterial
- 13: Dicke

## Patentansprüche

1. Antirasselzahnscheibe, insbesondere für ein Kraftfahrzeuggetriebe, wobei die Antirasselzahnscheibe (1) einen hartmagnetischen Werkstoff (11) aufweist, **dadurch gekennzeichnet, daß** der hartmagnetische Werkstoff (11) ringförmig angeordnet ist, daß dem hartmagnetischen Werkstoff (11) ein ein weichmagnetisches Material aufweisendes Behälterbauteil (5) zugeordnet ist, daß der hartmagnetische Werkstoff (11) in dem Behälterbauteil (5) angeordnet ist, und daß das Behälterbauteil (5) in einem Kernmaterial (12) der Antirasselzahnscheibe (1) eingebettet ist.

2. Antirasselzahnscheibe nach Anspruch 1, **dadurch gekennzeichnet, daß** das Behälterbauteil (5) als U-förmiger Ring ausgebildet ist, und daß eine offene Seite (9) des Ringes an einer Zahnradstirnseite (10) anordenbar ist.

3. Antirasselzahnscheibe nach Anspruch 1 oder 2, **dadurch gekennzeichnet, daß** das Behälterbauteil (5) Haltenasen (8, 8') aufweist, und daß die Haltenasen (8, 8') am inneren (7) und / oder am äußeren Umfang (6) des Behälterbauteiles (5) angeordnet sind.

4. Antirasselzahnscheibe nach einem der Ansprüche 1 bis 3, **dadurch gekennzeichnet, daß** als Ausgangsmaterial des Behälterbauteiles (5) ein Metallblech vorgesehen ist, und daß das Behälterbauteil (5) als Press- und / oder Stanzbauteil ausgebildet ist.

5. Antirasselzahnscheibe nach einem der Ansprüche 1 bis 4, **dadurch gekennzeichnet, daß** der hartmagnetische Werkstoff (11) weitgehend homogen in einem Kunststoffmaterial eingebunden ist.

6. Antirasselzahnscheibe nach einem der Ansprüche 1 bis 5, **dadurch gekennzeichnet, daß** als Material der Antirasselzahnscheibe (1) im wesentlichen ein spritzbarer Kunststoff vorgesehen ist, und daß das Behälterbauteil (5) mit dem Kunststoff umspritzt ist.

7. Antirasselzahnscheibe nach Anspruch 6, **dadurch gekennzeichnet, daß** das Behälterbauteil (5) an der Zahnradstirnseite (10) der Antirasselzahnscheibe (1) von einer Umspritzung mit dem Kunststoff ausgespart ist.

8. Verfahren zur Herstellung einer Antirasselzahnscheibe, **dadurch gekennzeichnet, daß** ein hartmagnetischer Werkstoff (11) in ein ringförmiges, ein weichmagnetisches Material und einen U-förmigen Querschnitt aufweisendes Behälterbauteil (5) eingebracht wird, und daß das Behälterbauteil (5) in einer der Antirasselzahnscheibe (1) entsprechenden Form mit Kunststoff umspritzt wird.

9. Verfahren nach Anspruch 8, **dadurch gekennzeichnet, daß** der hartmagnetische Werkstoff (11) weitgehend homogen in einem Kunststoffmaterial eingebunden wird.

10. Verfahren nach Anspruch 8 oder 9, **dadurch gekennzeichnet, daß** der hartmagnetische Werkstoff (11) in einem Magnetfeld aufmagnetisiert wird.

## Claims

1. Anti-rattle tooth lock washer, in particular for a motor vehicle gearbox, the anti-rattle tooth lock washer (1) having a hard magnetic material (11), **characterized in that** the hard magnetic material (11) is arranged annularly, **in that** the hard magnetic material (11) is assigned a container component (5) having a soft magnetic material, **in that** the hard magnetic material (11) is arranged in the container component (5), and **in that** the container component (5) is embedded in a core material (12) of the anti-rattle tooth lock washer (1).

2. Anti-rattle tooth lock washer according to Claim 1, **characterized in that** the container component (5) is designed as a U-shaped ring, and **in that** an open side (9) of the ring can be arranged on a gearwheel end side (10).

3. Anti-rattle tooth lock washer according to Claim 1 or 2, **characterized in that** the container component (5) has retaining lugs (8, 8'), and **in that** the retaining lugs (8, 8') are arranged on the inner circumference (7) and/or on the outer circumference (6) of the container component (5).

4. Anti-rattle tooth lock washer according to one of Claims 1 to 3, **characterized in that** a metal sheet is provided as the starting material of the container component (5), and **in that** the container component (5) is formed as a pressed and/or punched component.

5. Anti-rattle tooth lock washer according to one of Claims 1 to 4, **characterized in that** the hard magnetic material (11) is integrated largely homogeneously in a plastic material.

6. Anti-rattle tooth lock washer according to one of Claims 1 to 5, **characterized in that** an injection-mouldable plastic is essentially provided as the material of the anti-rattle tooth lock washer (1), and **in that** the container component (5) is encapsulated with the plastic by injection moulding.

7. Anti-rattle tooth lock washer according to Claim 6, **characterized in that** the container component (5) is recessed on the gearwheel end side (10) of the anti-rattle tooth lock washer (1) by an encapsulation with the plastic by-injection moulding.

8. Method for producing an anti-rattle tooth lock washer, **characterized in that** a hard magnetic material (11) is placed into an annular container component (5) which has a soft magnetic material and a U-shaped cross section, and **in that** the container component (5) is encapsulated with plastic by injection moulding in a mould corresponding to the anti-rattle tooth lock washer (1).

9. Method according to Claim 8, **characterized in that** the hard magnetic material (11) is integrated largely homogeneously in a plastic material.

10. Method according to Claim 8 or 9, **characterized in that** the hard magnetic material (11) is magnetized in a magnetic field.

## Revendications

1. Disque denté de type anti-cliquetis, en particulier pour une boîte de vitesses de véhicule automobile, dans lequel le disque denté de type anti-cliquetis (1) présente un matériau magnétique dur (11), **caractérisé en ce que** le matériau magnétique dur (11) se présente sous forme annulaire, **en ce qu'**un composant de récipient (5) présentant un matériau magnétique tendre est associé au matériau magnétique dur (11), **en ce que** le matériau magnétique dur (11) est disposé dans le composant de récipient (5) et **en ce que** le composant de récipient (5) est encastré dans un matériau de noyau (12) du disque denté de type anti-cliquetis (1).

2. Disque denté de type anti-cliquetis selon la revendication 1, **caractérisé en ce que** le composant de récipient (5) est réalisé sous forme de bague en forme de U, et **en ce qu'**un côté ouvert (9) de la bague peut être disposé contre un côté frontal (10) de la roue dentée.

3. Disque denté de type anti-cliquetis selon la revendication 1 ou 2, **caractérisé en ce que** le composant de récipient (5) présente des nez de fixation (8, 8') et **en ce que** les nez de fixation (8, 8') sont disposés sur la périphérie intérieure (7) et/ou extérieure (6) du composant de récipient (5).

4. Disque denté de type anti-cliquetis selon l'une quelconque des revendications 1 à 3, **caractérisé en ce que** l'on prévoit comme matériau de départ du composant de récipient (5) une tôle métallique et **en ce que** le composant de récipient (5) est réalisé sous forme de composant moulé par compression et/ou de composant estampé.

5. Disque denté de type anti-cliquetis selon l'une quelconque des revendications 1 à 4, **caractérisé en ce que** le matériau magnétique dur (11) est intégré essentiellement de manière homogène dans un matériau en plastique.

6. Disque denté de type anti-cliquetis selon l'une quelconque des revendications 1 à 5, **caractérisé en ce que** l'on prévoit comme matériau du disque denté de type anti-cliquetis (1) essentiellement un plastique injectable et **en ce que** le composant de récipient (5) est enrobé par injection de ce plastique.

7. Disque denté de type anti-cliquetis selon la revendication 6, **caractérisé en ce que** le composant de récipient (5) est exempt d'enrobage par injection du plastique au niveau du côté frontal de la roue dentée (10) du disque denté de type anti-cliquetis (1).

8. Procédé de fabrication d'un disque denté de type anti-cliquetis, **caractérisé en ce que** l'on introduit un matériau magnétique dur (11) dans un matériau annulaire magnétique tendre et un composant de récipient (5) présentant une section transversale en forme de U, et **en ce que** le composant de récipient (5) est enrobé par injection de plastique dans un moule correspondant au disque denté de type anti-cliquetis (1).

9. Procédé selon la revendication 8, **caractérisé en ce que** le matériau magnétique dur (11) est intégré de manière essentiellement homogène dans un matériau en plastique.

10. Procédé selon la revendication 8 ou 9, **caractérisé en ce que** le matériau magnétique dur (11) est aimanté dans un champ magnétique.
